**Europäisches Patentamt**

**European Patent Office**

**Office européen des brevets**

(11) Publication number: **0 123 660**
**B1**

# (12) EUROPEAN PATENT SPECIFICATION

(45) Date of publication of patent specification: **15.07.87**　　(51) Int. Cl.⁴: **F 41 H 3/02**

(21) Application number: **84850076.5**

(22) Date of filing: **09.03.84**

(54) Thermal and optical camouflage.

(30) Priority: **25.03.83 SE 8301666**

(43) Date of publication of application:
**31.10.84 Bulletin 84/44**

(45) Publication of the grant of the patent:
**15.07.87 Bulletin 87/29**

(84) Designated Contracting States:
**AT DE NL**

(56) References cited:
**DE-A-2 252 431**
**DE-B-1 088 843**
**GB-A-1 605 187**

(73) Proprietor: **DIAB-BARRACUDA AB**
**S-59400 Gamleby (SE)**

(72) Inventor: **Johansson, Lars**
**440 Gloucester St. Ste 2208**
**Ottawa, Ont. KIR 7T8 (CA)**

(74) Representative: **Grennberg, Erik Bertil et al**
**H ALBIHNS PATENTBYRA AB Box 7664**
**S-103 94 Stockholm (SE)**

Courier Press, Leamington Spa, England.

# Description

The invention relates to a thermal and optical camouflage consisting of a film having a camouflage-coloured surface, and which is leaf-cut and extendable by stretching into a three-dimensional foliage with a covering capacity of 50—90%.

The term leaf-cut is used here to define a film which is provided with slits as described e.g. in US—A—3 069 796 (corresponding to DE—B—1 088 843), from which such a camouflage is known. Such leaf-cut films have been used for quite a long time and are usually fixed to a supporting net. Swedish camouflage nets usually have uniform patches stretched into hexagons measuring about 40 cm in cross section, which are put side by side and glued on. In other embodiments more irregular, multi-coloured configurations are used which are attached to the net by means of clamps or the like. The film material is normally matted polyvinyl chloride.

For optical camouflaging, such camouflage nets function well enough by hiding the contours of covered objects from the surrounding nature, provided that its coloration is in satisfactory harmony with the environment of its use. Specific nets are thus manufactured for northern nature and for desert nature, the nets having of course completely different coloration.

Such camouflage nets are however not particularly well-suited for protection against reconnaissance with instruments using detectors for infrared radiation in the thermal range of 3—5 μm and 8—14 μm. For such radiation, the masking capacity of said known camouflage nets is much too insufficient in that they appear as surfaces having even temperature and emitting an infrared radiation totally determined by their temperature. This in turn is largely determined by the temperature of underlying objects and meteorological conditions such as solar heating, for example.

These problems have been attacked in DE—A—2 252 431 and in DE—B—1 088 843, with particular emphasis on the camouflage of hot objects like motor engines. The first of those disclosures proposes a multilayer structure composed of inner metallic layers and outer insulating layers, including one thin air layer. The second disclosure proposes the painting of metallic layers with a paint for obtaining, beside a camouflage effect in the visible and near infrared spectrum, also an emissivity in the spectral ranges 3—5 μm and 8—14 μm which varies over the surface of the material. Unhappily, the man of the art is not informed about what kind of paint might be selected or made, which might be used for obtaining this desirable effect.

One object of the invention is to achieve a practical camouflage providing camouflaging effects in said infrared wavelength ranges and having in the UV-visible and photographic IR-wavelength range equally as good camouflaging properties as the above-mentioned camouflages.

This purpose is attained according to the invention by the film as mentioned above including a reflecting metal layer which is covered on both sides by camouflage-coloured plastics material and by certain spots of the plastics material used substantially consisting of polyethylene or polypropylene, other spots consisting of another plastics material such as polyvinylchloride.

By providing the film with a reflecting layer, the side of the camouflage which is visible from the outside (alternately the side facing upwardly or the side facing downwardly, due to the leaf-cut) will be insulated from radiation emitted by the camouflaged objects, the equilibrium of radiation being increasingly affected by the environment, i.e. the surrounding nature and the ever-cold sky. The polyethylene-containing portions of the surface will further lead to a virtual temperature contrast in an IR image due to the fact that polyethylene in combination with an underlying metal surface exhibits a particularly low thermal emission factor. In an infrared image these portions will appear colder than they really are, thus producing a thermo-picture which is "pied" even if the temperature were homogeneous. Therefore, portions of polyethylene and portions of other plastics material such as PVC should preferably be mixed. The admixture can be carried out by the film having surface portions of polyethylene, or one side of polyethylene, or in that certain leaf-cut patches on a net are made of polyethylene and others of another plastics material. Where applicable, this applies to polypropylene as well.

The plastics material may suitably be coloured throughout with low-absorbing camouflage pigments. The surface should be matte-structured in order to reduce the specular reflectivity.

By making the effect of the leaf-cut fairly moderate for efficient coverage, the camouflage material will be useful for IR camouflaging even if the camouflaged objects have somewhat higher temperatures than that of the environment. Hot objects should however be specifically insulated so as not to be visible, and hot engines, generators and the like should be provided with specific temperature screenings and suitably be air-cooled, the hot cooling air being led off in a manner so as not to heat the camouflage. Hot air is not visible in IR pictures unless it has been allowed to heat opaque objects, due to the low emissivity of air.

The favourable but initially astonishing effect of polyethylene or polypropylene, or copolymers having a considerable content thereof, is associated with the same phenomenon; i.e. the fact that substances of low absorbtivity also have low emissivity. This characteristic is most pronounced in polyethylene.

According to the invention it is therefore appropriate to mix into said type of camouflage material areas of polyethylene or similar low absorbing plastics. For this to be useful, the heat radiation coming from the inside must simultaneously be damped, also making sure that the radiation coming from the outside has an increased significance to the "colour temperature", which is done by building in a reflecting metal layer, which layer is preferably broken up into a mosaic structure and is made thin in order not to facilitate radar detection.

The admixture of polyethylene is preferably effected in spots. Upon stretching, leaf-cut films many times turn their backside out, and therefore certain spots on one side should be of polyethylene and on the other side of polyvinyl chloride, for example.

The manufacture of the inventive films may be carried out in various ways. One possibility is to apply to a blown polyethylene film layer a vapor-deposited metal layer, and on top thereof a PVC plastisol or a film of such material. As in the known technique (see e.g. U.S. Patent Specification 4 301 103), one must be sure to use a film having a matted finish in order not to spoil the optical masking effect.

When stretching leaf-cut films of the type known per se, the film will unfold from its plane thus forming a three-dimensional structure. In fact, this is done essentially irreversibly by demanding a great deal of plucking for laying the film together again into a flat shape—all the portions which have turned their backsides up when stretched must be turned over again manually. According to a particular embodiment this effect can be taken advantage of by first stretching the film into a three-dimensional foliage which can then be pushed together. In this manner a three-dimensional foliage is obtained having small or sometimes quite minimal apertures. The film may even be pushed together so far that the foliage thus formed will cover an area which is smaller than the area initially taken up by the unstretched film. A very fluffy, three-dimensional structure is then obtained giving a high covering and screening effect, which is particularly advantageous in thermal camouflaging.

According to another specific embodiment, films are used having so-called infrared pattern on one or both sides. Such infrared patterns are achieved by varying the emissivity, and it has already been mentioned that by using polyethylene an emission can be obtained which is lower than that of a black body radiator of the same temperature, it is also possible to vary the thickness of the polyethylene layer by giving different portions different thicknesses, as well as varying the infrared pattern by means of pigmentation. One pigment which is active in these wavelength intervals (3—5 and 8—14 µm) is carbon black.

The invention will now be illustrated with reference to the figures. Figs. 1 and 2 show a leaf-cut camouflage of a type known per se. Fig. 3 shows an example of a film. Fig. 4 shows a schematic method of manufacturing laminated films. Figs. 5, 6 and 7 show different exemplary embodiments.

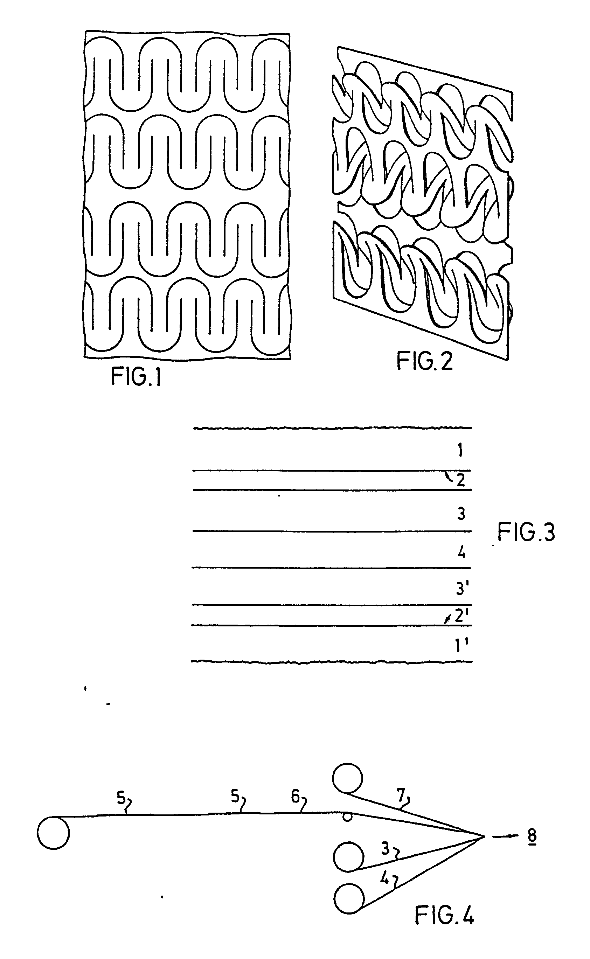

As shown in Figs. 1 and 2, a film can be provided with slits according to Fig. 1, so-called leaf-cuts, whereafter it is drawn out into a three-dimensional structure where the film is partly turned over. In Fig. 2 only the initial stage of stretching is shown, but by studying this figure it is already evident that the portions pointing out in their respective directions will just turn over, and that after a certain tensional limit has been exceeded, the structure shown in Fig. 1 cannot be restored merely by folding together. Instead, such folding-up would produce a complex three-dimensional foilage, which is almost impossible to illustrate.

According to the invention, there is used in such foliage camouflages a film containing a reflecting metal layer covered on both sides with camouflage-coloured plastics which partly contain polyethylene. Fig. 3 shows a double film where 1 designates a polyethylene layer, 2 a reflecting aluminium layer, 3 a layer of glue film, 4 a textile fabric layer, 3' a layer of glue film, 2' a reflecting layer and 1' a polyethylene layer. Layers 1 and 1' may preferably have different colours in the optical spectral area.

The reflecting layer is suitably obtained by using "blown" polyethylene film which by vaporization in vacuum has been provided with an aluminium layer.

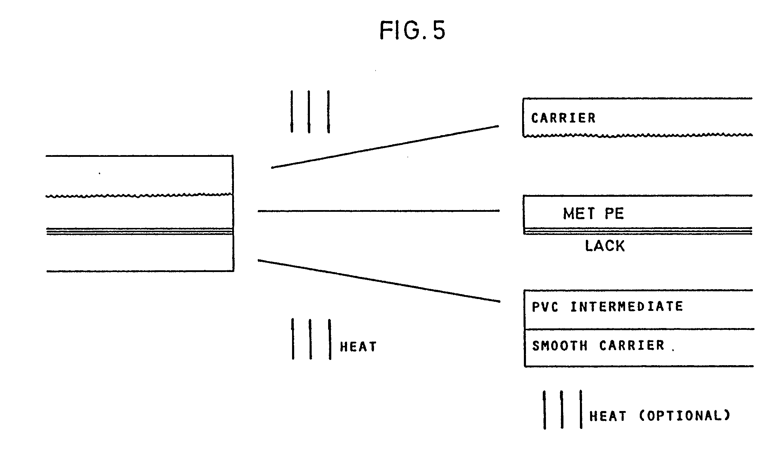

A variant is shown in Fig. 4, where 8 designates a schematically indicated hot-laminating device, to which are fed a supporting layer 4 (e.g. woven fabric), a glue layer 3, a polyethylene web the back side of which is provided with a reflecting layer (not shown), and a matting carrier 7. Loose polyethylene patches are placed on top of the web 6, and in the laminator 8 these patches will adhere to the finished film. In a subsequent operational step the matte-structured matting carrier 7 is stripped off and its outer structure is reproduced in the polyethylene surface which will then be matted.

Two specific exemplary embodiments are given below.

Example 1

In a first step, a non-matted carrier (approx. 120 g/m², clearance treated and prepared woven fabric) was coated with a PVC plastisol paste (approx. 50 g/m²), and then all this was conventionally gelled under heat and rolled up. In a second step (see Fig. 5) the web obtained in the first step was coated with a polyethylene film (40 g/m²) having one side metallized and coated with an enamel (HV 36 from AB Svensk Färg), the enamel layer facing the PVC layer. The PVC web was heated to 150°C, and on top thereof was applied a matted carrier, and all this was immediately introduced under supply of heat into a laminating roll nip.

Then an additional compound web was made by applying a top coat of PVC plastisol (approx. 60 g/m²) to a matte supporting web. After gelling, a further PVC plastisol layer (approx. 40 g/m²) was applied.

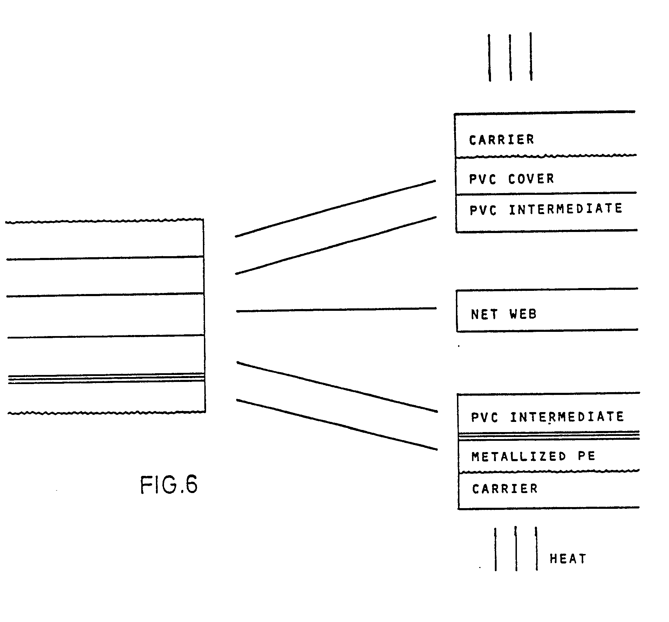

These two webs were placed as shown in Fig. 6, facing each other with a grid fabric (approx. 40—50 g/m²) in between. The outwardly turned carriers were heated to 230°C, the PVC layers then adhering together through the grid fabric when laminated, after which the carriers were removed. A compound web was then obtained with a built- in reflecting layer having on its one side in turn one PVC layer, one strength layer and two PVC layers, and on its opposite side, in addition to the thin enamel coating, serving as an adhesive layer, a polyethylene layer. Since the surface. layers had been stripped off from the matted carriers, both surfaces were matte-structured.

The conventional grid fabric may be replaced by a fabric provided with metallic fibrils or the like for the sake of achieving a radar camouflage effect. Tight weave may also be used instead of grid fabric, but in such cases the fabric must be primed with PVC plastisol to safeguard adhesion. Adhesion through grid fabric however will take place, with the plastic layers facing each other, right through the fabric meshes.

Example 2

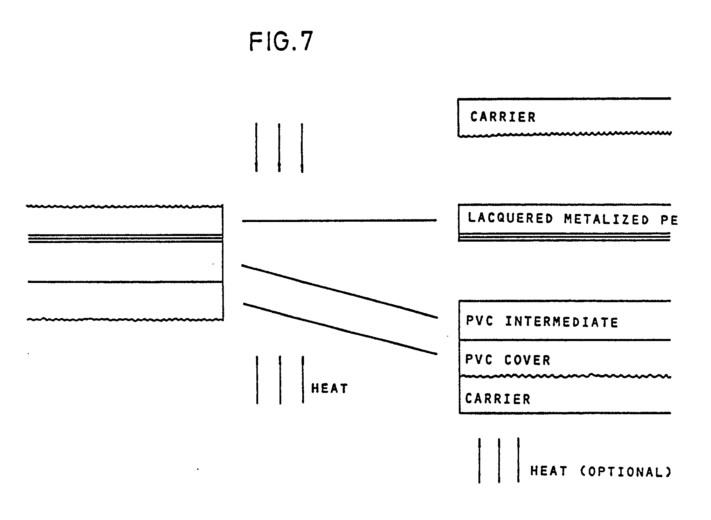

A first web was manufactured by coating a matted carrier with a first PVC plastisol layer (60 g/m$^2$) and, after gelling, a second PVC plastisol layer (90 g/m$^2$) which was also gelled. A metallized and enamelled polyethylene web (40 g/m$^2$) was then applied to the surface of the first-mentioned layer, the enamel layer facing the PVC surface, and a matted carrier was laid on top of the polyethylene film. All of this was laminated under heat. In a specific case, the layers in a roll nip were introduced after preheating the outer webs (see Fig. 7), the PVC web being heated to 150°C and the matte carrier to 100°C.

Due to the relatively thick PVC coating on one side, the reflecting layer was coated by a sufficiently absorbing layer for the effect of the reflecting layer on that side to be negligible at the relevant IR wavelengths.

It is evident that the invention can be varied in a plurality of ways, and therefore the foregoing should only be regarded as non-limiting exemplary embodiments.

**Claims**

1. Thermal and optical camouflage consisting of a film having a camouflage-coloured surface and being leaf-cut (Fig. 2) and extendable by stretching into a three-dimensional foliage with a covering capacity of 50—90%, characterized in that the film includes a reflecting metal layer (2) covered on both sides by camouflage-coloured plastics (1, 3), and in that certain spots (5, 6) of the plastics material used substantially consist of polyethylene or polypropylene, whereas other spots consist of another plastics material such as polyvinyl chloride.

2. Camouflage as claimed in Claim 1, characterized in that the stretched film is attached to a supporting net in the form of adjacent patches.

3. Camouflage as claimed in Claim 2, characterized in that the different patches are shaped as substantially uniform polygons placed adjacently on the supporting net while covering it without any essential overlappings or gaps.

4. Camouflage as claimed in Claim 3, characterized in that the stretched patches are attached to the supporting net by means of gluing.

5. Camouflage as claimed in any one of the preceding claims, characterized in that the stretched patches are attached to the supporting net with the aid of mechanical fastening means such as clamps or stitches.

6. Camouflage as claimed in any one of the preceding claims, characterized in that one side of the film is coated with polyethylene or polypropylene, whereas its other side is coated with another material.

7. Camouflage as claimed in Claim 1, characterized in that the film is first stretched and then folded up again in its direction of extension.

8. Camouflage as claimed in Claim 7, characterized in that the folding-up is carried out in addition to the previous stretching, its actual size thus being smaller than the unstretched, leaf-cut film.

**Patentansprüche**

1. Thermische und optische Tarnung mit einem Film, der eine ternfarbige Oberfläche aufweist und blattartig eingeschnitten (Fig. 2) sowie durch Strecken in ein dreidimensionales Blätterwerk mit einer Abdeckungskapazität von 50—90% dehnbar ist, dadurch gekennzeichnet, daß der Film eine reflektierende Metallschicht (2) aufweist, die auf beiden Seiten mit tarnfarbigem Kunststoff (1, 3) bedeckt ist, und daß vorbestimmte Stellen (5, 6) des verwendeten Kunststoffmaterials im wesentlichen aus Polyäthylen oder Polypropylen bestehen, wogegen andere Stellen aus einem anderen Kunststoffmaterial, wie Polyvinylchlorid, bestehen.

2. Tarnung nach Anspruch 1, dadurch gekennzeichnet, daß der gestreckte Film in Form von benachbarten Lappen an einem Tragnetz befestigt ist.

3. Tarnung nach Anspruch 2, dadurch gekennzeichnet, daß die verschiedenen Lappen als im wesentlichen einheitliche Polygone geformt sind, die am Tragnetz benachbart angeordnet sind und dieses ohne wesentliche Überlappungen oder Spalten bedecken.

4. Tarnung nach Anspruch 3, dadurch gekennzeichnet, daß die gestreckten Lappen am Tragnetz mittels Klebung befestigt sind.

5. Tarnung nach einem der vorhergehenden Ansprüche, dadurch gekennzeichnet, daß die gestreckten Lappen am Tragnetz mit Hilfe mechanischer Befestigungsmittel, wie Klammern oder Nähte, befestigt sind.

6. Tarnung nach einem der vorhergehenden Ansprüche, dadurch gekennzeichnet, daß eine Seite des Filmes mit Polyäthylen oder Polypropylen beschichtet ist, wogegen seine andere Seite mit einem anderen Material beschichtet ist.

7. Tarnung nach Anspruch 1, dadurch gekennzeichnet, daß der Film zuerst gestreckt und dann in seiner Streckungsrichtung wieder zusammengelegt wird.

8. Tarnung nach Anspruch 7, dadurch gekennzeichnet, daß das Zusammenlegen zusätzlich zum vorhergehenden Strecken erfolgt, wobei die tatsächliche Größe des Filmes kleiner als jene des ungestreckten, blattartig eingeschnittenen Filmes ist.

**Revendications**

1. Camouflage thermique et optique constitué par une feuille à surface colorée en camouflage, ladite feuille ayant des découpures en forme de feuillage (Fig. 2) et étant extensible par tension en un feuillage tridimensionnel ayant un pouvoir couvrant de 50 à 90%, caractérisé par le fait que ladite feuille comprend une couche métallique (2) couverte de deux côtés d'une matière plastique colorée en camouflage (1, 3), et que certains endroits (5, 6) de la matière plastique utilisée consiste sensiblement en polyéthylène ou en polypropylène, autres endroits consistant en autre matière plastique telle que polychlorure de vinyle.

2. Camouflage selon la revendication 1, caractérisé par le fait que ladite feuille tendue est fixé à un filet porteur en forme de morceaux adjacents.

3. Camouflage selon la revendication 2, caractérisé par le fait que différents morceaux ont la forme de polygones sensiblement réguliers placés l'un à l'autre sur le filet porteur en le couvrant sans recouvrements ou interstices appréciables.

4. Camouflage selon la revendication 3, caractérisé par le fait que les morceaux tendus sont fixés au filet porteur au moyen de collement.

5. Camouflage selon l'une quelconque des revendications précédentes, caractérisé par le fait que les morceaux tendus sont fixés au filet porteur par des moyens de fixation mécaniques tels que crampons ou points.

6. Camouflage selon l'une quelconque des revendications précédentes, caractérisé par le fait que l'un des côtés de ladite feuille est enduit de polyéthylène our de polypropylène, l'autre côté étant enduit d'une autre matière.

7. Camouflage selon la revendication 1, caractérisé par le fait que ladite feuille est d'abord tendue et ensuite repliée dans la direction de tension.

8. Camouflage selon la revendication 7, caractérisé par le fait que le repliage est effectué en plus de la tension préalable, sa dimension actuelle étant ainsi plus petite que la feuille découpée en feuillage non tendue.

FIG.1

FIG.2

FIG.3

1
2
3
4
3'
2'
1'

FIG.4

5
5
6
7
3
4
8

# FIG. 5

CARRIER

MET PE

LACK

PVC INTERMEDIATE

SMOOTH CARRIER

HEAT

HEAT (OPTIONAL)

FIG.6

CARRIER

PVC COVER

PVC INTERMEDIATE

NET WEB

PVC INTERMEDIATE

METALLIZED PE

CARRIER

HEAT

## FIG.7

CARRIER

LACQUERED METALIZED PE

PVC INTERMEDIATE

PVC COVER

CARRIER

HEAT

HEAT (OPTIONAL)